(19) **Europäisches Patentamt**

**European Patent Office**

**Office européen des brevets**

(11) **EP 0 872 751 B1**

(12) **EUROPEAN PATENT SPECIFICATION**

(45) Date of publication and mention
of the grant of the patent:
**22.12.2004 Bulletin 2004/52**

(51) Int Cl.⁷: **G02B 7/28**, G02B 27/64

(21) Application number: **98104787.1**

(22) Date of filing: **17.03.1998**

(54) **Variable magnification optical system having image stabilizing function**

Optisches System veränderlicher Vergrösserung mit Bildstabilisierung

Système optique à grossissement variable avec dispositif de stabilisationd'image

(84) Designated Contracting States:
**DE FR GB IT NL**

(30) Priority: **18.03.1997 JP 8442897**
**18.03.1997 JP 8442997**

(43) Date of publication of application:
**21.10.1998 Bulletin 1998/43**

(73) Proprietor: **CANON KABUSHIKI KAISHA**
**Tokyo (JP)**

(72) Inventors:
• **Hamano, Hiroyuki**
**Ohta-ku, Tokyo (JP)**
• **Yoshida, Hiroki**
**Ohta-ku, Tokyo (JP)**

(74) Representative:
**Pellmann, Hans-Bernd, Dipl.-Ing. et al**
**Patentanwaltsbüro**
**Tiedtke-Bühling-Kinne & Partner**
**Bavariaring 4-6**
**80336 München (DE)**

(56) References cited:
**JP-A- 7 128 619**          **US-A- 5 249 079**
**US-A- 5 579 171**          **US-A- 5 585 966**
**US-A- 5 654 826**

**Description**

BACKGROUND OF THE INVENTION

Field of the Invention

The present invention relates to variable magnification optical systems having an image stabilizing function according to the preamble of claim 1 and, more particularly, to variable magnification optical systems having an image stabilizing function suited to photographic cameras or video cameras, in which a lens unit constituting part of the variable magnification optical system is moved in a direction perpendicular to an optical axis so as to optically compensate for the shake of a picked-up image obtained when the variable magnification optical system vibrates (tilts), so that the picked-up image is maintained stable.

Description of Related Art

When shooting is performed with a photographing system on a running car, a flying air plane or the like moving vehicle, vibrations propagate to the photographing system, so that an image shake would be caused in the picked-up image.

To prevent occurrence of such image shake, there have been many previous proposals for stabilizing the image formed in the optical system.

For example, in JP-B-56-21133, in accordance with the output signal of a detecting means for detecting a vibration state of an optical apparatus, an optical member constituting part of the optical apparatus is moved in such a direction as to cancel the vibrating displacement of an image caused by the vibration of the optical apparatus, so that the image is maintained stable.

In JP-A-61-223819, in a photographing system provided with a variable angle prism of the refracting type arranged at the frontmost position thereof, an apex angle of the variable angle prism is varied in correspondence to the vibration of the photographing system so as to deflect an image, thereby stabilizing the image.

In JP-B-56-34847 and JP-B-57-7414, etc., an optical member which is spatially fixed against the vibration of a photographing system is disposed in part of the photographing system, and a prism effect produced by the optical member against the vibration is utilized to deflect a picked-up image, thereby stabilizing the image on a focal plane.

In JP-A-1-116619 and JP-A-2-124521, an acceleration sensor or the like is utilized to detect the vibration of a photographing system, and, in response to the detection signal obtained therefrom, a lens unit constituting part of the photographing system is vibrated in a direction perpendicular to an optical axis so as to stabilize a picked-up image.

JP-A-7-128619 discloses a generic variable magnification optical system comprising, in order from the object side, a first lens unit of positive refractive power which is stationary during focusing and during zooming, a second lens unit of negative refractive power which has the magnification varying function, an aperture stop, a third lens unit of positive refractive power, and a fourth lens unit of positive refractive power which has both of the function of compensating the image shift with variation of the magnification and the focusing function, wherein the third lens unit is composed of two lens sub-units, i.e., a first lens sub-unit of negative refractive power and a second lens sub-unit of positive refractive power, and the second lens sub-unit is moved in a direction perpendicular to an optical axis so as to compensate for the shake of a picked-up image when the variable magnification optical system vibrates.

In JP-A-7-199124, in a 4-unit-type variable magnification optical system of plus-minus-plus-plus refractive power arrangement, the entirety of the third lens unit is vibrated in a direction perpendicular to an optical axis so as to stabilize a picked-up image.

Meanwhile, JP-A-5-60974 discloses another 4-unit-type variable magnification optical system of plus-minus-plus-plus refractive power arrangement, wherein the third lens unit is composed of a positive lens and a negative lens of meniscus form in the form of the telephoto type, thereby producing an advantage of reducing the total length of the entire system.

In general, the use of the method of stabilizing a picked-up image by disposing the image stabilizing optical system in front of the photographing system and vibrating a movable lens unit constituting part of the image stabilizing optical system so as to compensate for the shake of the picked-up image causes a problem to arise in that the entire apparatus becomes larger in size and that an operating mechanism for moving the movable lens unit becomes complicated in structure.

Further, there is even more serious a problem, too, that when the movable lens unit is vibrated, a great amount of decentering aberrations would be produced with the result of a large deterioration of the optical performance.

In the optical system using the variable angle prism in stabilizing a picked-up image, there is a problem that the amount of decentering lateral chromatic aberrations produced during the image stabilization would increase, particularly, on the side of long focal lengths (telephoto side).

On the other hand, in the optical system in which a lens unit constituting part of the photographing system is vibrated in a direction perpendicular to the optical axis so as to stabilize a picked-up image, there is an advantage that any additional optical unit dedicated to the image stabilization is unnecessary. However, there are problems that a surplus space has to be provided in the optical system so as to move the vibrating lens unit and that the amount of decentering aberrations produced during the image stabilization would increase greatly.

Further, in the 4-unit type variable magnification optical system described above which comprises positive, negative, positive and positive lens units, if the third lens unit is composed of a positive lens and a negative meniscus lens in the form of telephoto type for the purpose of shortening of the total length of the entire system, large decentering aberrations, particularly, distortional aberrations, are produced when the whole third lens unit is moved in a direction perpendicular to the optical axis to stabilize a picked-up image. In the case of applying such a variable magnification optical system to the apparatus for taking motion pictures, such as video cameras, there is a problem that the deformation of a picked-up image during the image stabilization becomes conspicuous.

## BRIEF SUMMARY OF THE INVENTION

It is an object of the present invention to further develop a variable magnification optical system according to the preamble of claim 1 such that it is well corrected for decentering aberrations.

According to the invention, this object is achieved by a variable magnification optical system having the features of claim 1.

Advantageous further developments are set out in the dependent claims.

In accordance with the present invention, a relatively small-sized, light-weight lens unit constituting part of a variable magnification optical system is moved in a direction perpendicular to an optical axis so as to compensate for the shake of an image when the variable magnification optical system vibrates (tilts). By setting forth proper rules of design for the construction and arrangement of constituent lenses of the lens unit, the size of the entire system is minimized, the structure of an operating mechanism is simplified, and the load on a driving means is reduced, while still permitting the amount of decentering aberrations produced during the movement of the lens unit to be suppressed to a minimum.

The above object and features of the invention will become apparent from the following detailed description of preferred embodiments thereof taken in conjunction with the accompanying drawings.

## BRIEF DESCRIPTION OF THE SEVERAL VIEWS OF THE DRAWING

Fig. 1 is a schematic diagram of the paraxial refractive power arrangement of a variable magnification optical system according to the invention.

Fig. 2 is a lens block diagram of a numerical example 1 of the invention in the wide-angle end.

Fig. 3A is a lens block diagram of a numerical example 2 of the invention in the wide-angle end.

Fig. 3B is a diagram of geometry for explaining the distortional aberration.

Fig. 4 is a lens block diagram of a numerical example 3 of the invention in the wide-angle end.

Figs. 5A to 5D are graphic representations of the aberrations of the numerical example 1 of the invention in the wide-angle end.

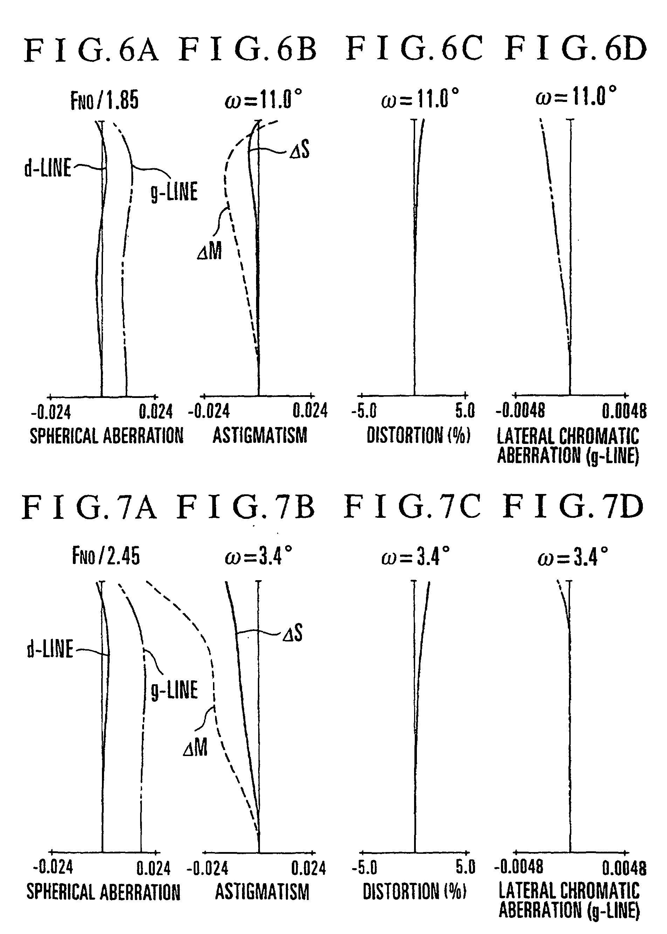

Figs. 6A to 6D are graphic representations of the aberrations of the numerical example 1 of the invention in a middle focal length position.

Figs. 7A to 7D are graphic representations of the aberrations of the numerical example 1 of the invention in the telephoto end.

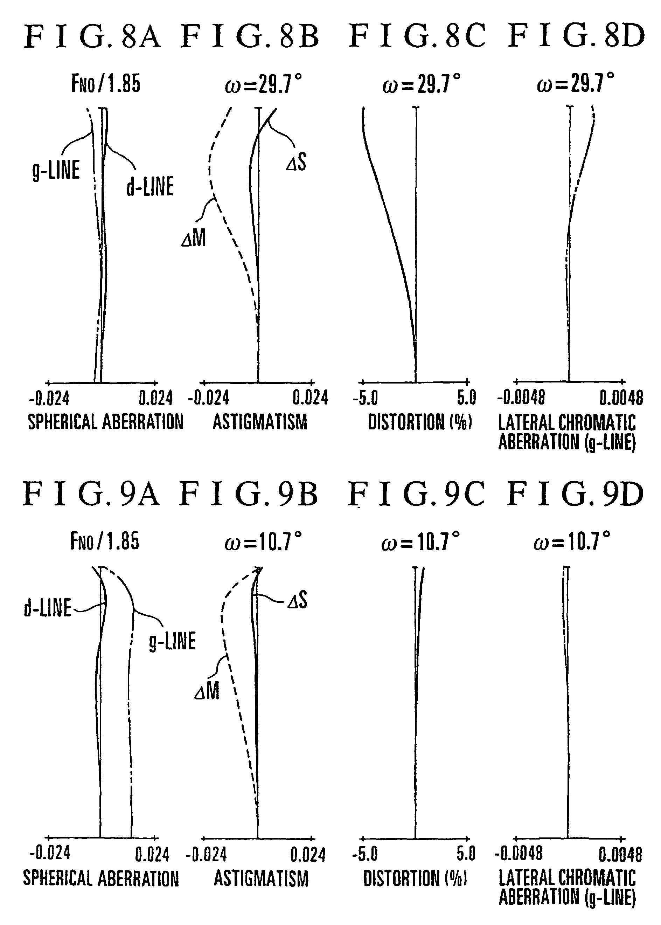

Figs. 8A to 8D are graphic representations of the aberrations of the numerical example 2 of the invention in the wide-angle end.

Figs. 9A to 9D are graphic representations of the aberrations of the numerical example 2 of the invention in a middle focal length position.

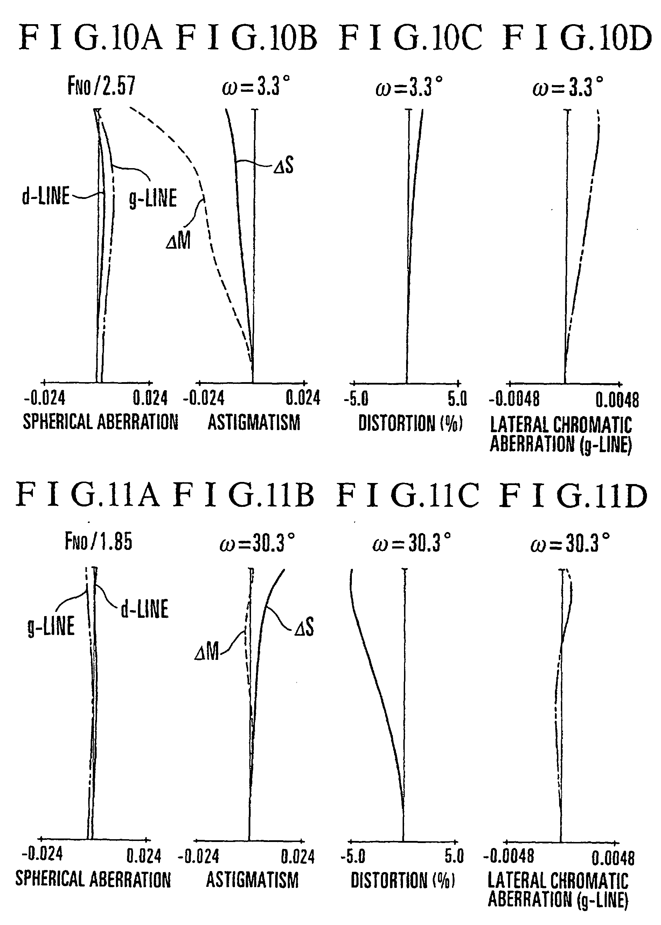

Figs. 10A to 10D are graphic representations of the aberrations of the numerical example 2 of the invention in the telephoto end.

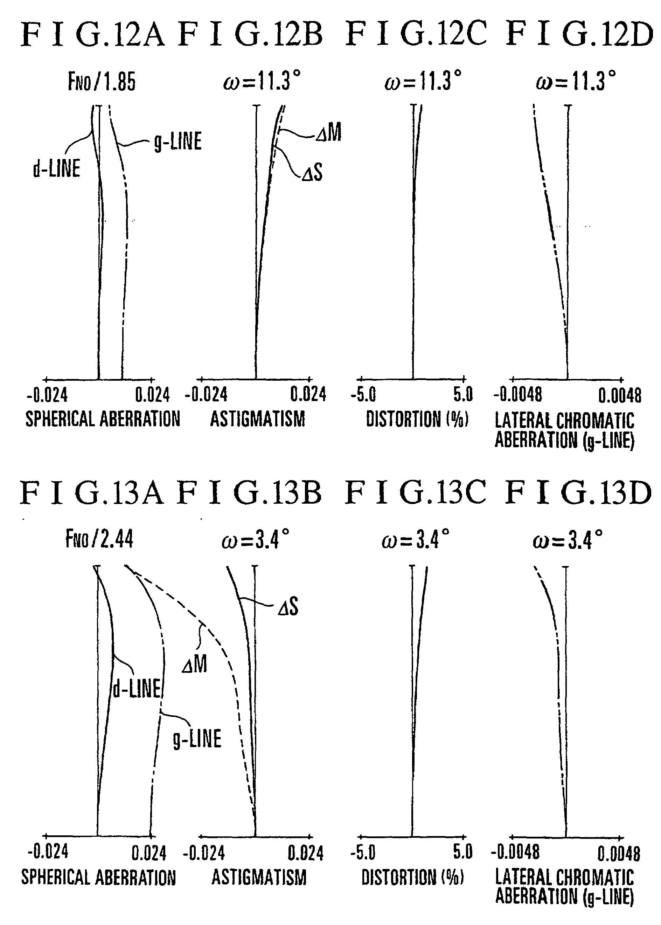

Figs. 11A to 11D are graphic representations of the aberrations of the numerical example 3 of the invention in the wide-angle end.

Figs. 12A to 12D are graphic representations of the aberrations of the numerical example 3 of the invention in a middle focal length position.

Figs. 13A to 13D are graphic representations of the aberrations of the numerical example 3 of the invention in the telephoto end.

Figs. 14A to 14D are schematic diagrams for explaining the optical principle of the image stabilizing system according to the invention.

Fig. 15 is a lens block diagram of a numerical example 4 of the invention in the wide-angle end.

DETAILED DESCRIPTION OF THE INVENTION

Hereinafter, preferred embodiments of the invention will be described in detail with reference to the drawings.

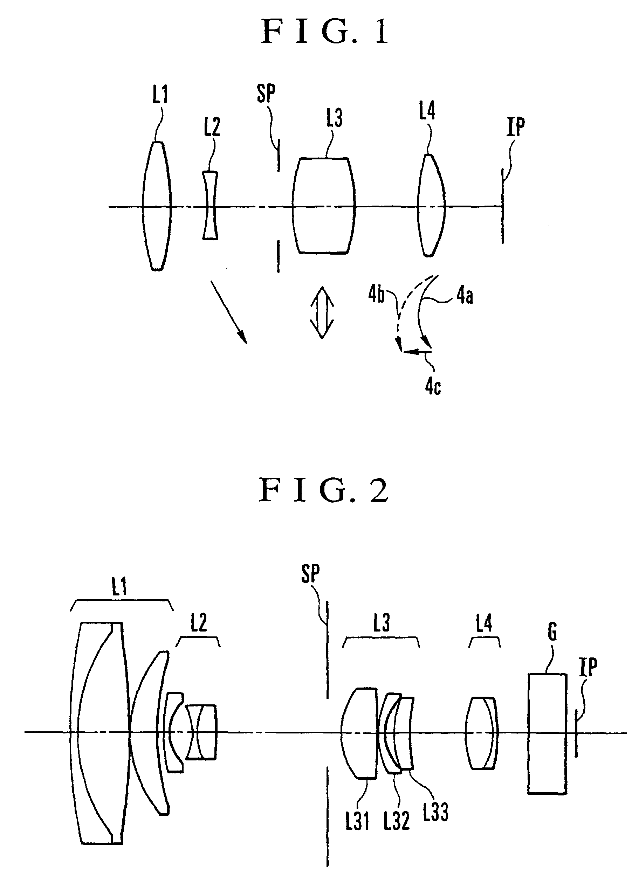

Fig. 1 shows a thin lens system whose paraxial refractive power arrangement is equivalent to those of the numerical examples 1 to 3 of an embodiment of the invention, which will be described more fully later. Figs. 2, 3A and 4 are longitudinal section views of the numerical examples 1 to 3 of variable magnification optical systems of the invention in the wide-angle end, respectively.

In these figures, reference character L1 denotes a first lens unit of positive refractive power, reference character L2 denotes a second lens unit of negative refractive power, and reference character L3 denotes a third lens unit of positive refractive power.

In this embodiment, the third lens unit L3 is made to move in the direction perpendicular to an optical axis to compensate for the shake of an image on the focal plane when the variable magnification optical system vibrates (or tilts.)

Reference character L4 denotes a fourth lens unit of positive refractive power. Reference character SP stands for an aperture stop positioned in front of the third lens unit L3, reference character G stands for a glass block such as face plate, and reference character IP stands for an image plane.

In the present embodiment, during zooming from the wide-angle end to the telephoto end, as shown by the arrows, the second lens unit moves toward the image side, while simultaneously moving the fourth lens unit to compensate for the image shift with variation of the magnification.

The fourth lens unit is also made to axially move for focusing purposes. That is, the rear focusing method is employed. A curved solid line 4a and a curved dashed line 4b in Fig. 1 show the loci of motion of the fourth lens unit to compensate for the image shift with zooming from the wide-angle end to the telephoto end when focused on an infinitely distant object and a close object, respectively. Incidentally, the first and third lens units remain stationary during zooming and during focusing.

In the present embodiment, the function of compensating for the image shift with zooming and the focusing function both are performed by moving one and the same lens unit, i.e., the fourth lens unit. In particular, as shown by the curved lines 4a and 4b in Fig. 1, the total zooming movement depicts a locus convex toward the object side. This assures efficient utilization of the space between the third lens unit and the fourth lens unit, thus achieving a much desired shortening of the total length of the entire optical system.

In the present embodiment, with the setting in, for example, the telephoto end, during focusing from an infinitely distant object to a close object, the fourth lens unit moves forward as shown by a straight line 4c in Fig. 1.

The optical system in the present embodiment takes a zoom type in which the first and second lens units as a composite system form a virtual image which is focused to a real image on a photosensitive surface by the third and fourth lens units.

In the present embodiment, as compared with the conventional so-called 4-component zoom lens which moves the first component forward to effect focusing, the effective diameter of the first lens unit is prevented from becoming larger, by employing the rear focusing method described above with an advantage of defending the performance against deterioration due to the error of axial alignment of the first lens unit.

Then, by locating the aperture stop just in front of the third lens unit, the variation of aberrations of the movable lens units is lessened, and the axial separation between the lens units ahead of the aperture stop is shortened to facilitate reduction of the diameter of the front members of the first lens unit.

In the numerical examples 1 to 3 of the invention, the third lens unit L3 is made to move in the direction perpendicular to the optical axis so as to compensate for the image shake when the variable magnification optical system vibrates. This enables the image to be stabilized, without having to add a novel optical member such as the lens unit for sole use in stabilizing the image, or the variable angle prism as is necessary in the prior art.

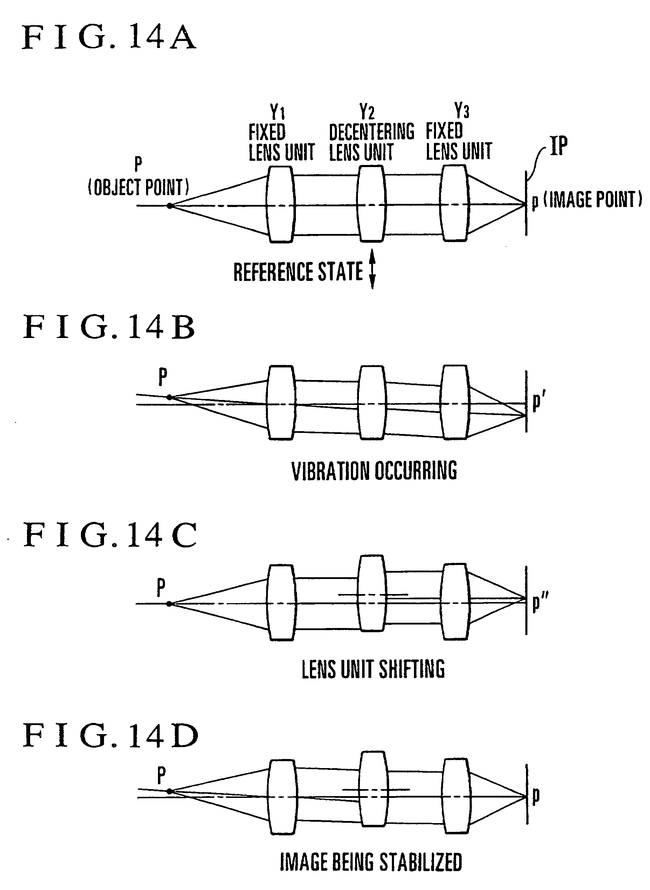

Next, for the variable magnification optical system to function as the image stabilizing system, because, according to the invention, the shake of the image on the focal plane is compensated for by moving the lens unit in the direction perpendicular to the optical axis, the optical principle to be used will be explained by using Figs. 14A to 14D.

As shown in Fig. 14A, an optical system in question is assumed to comprise three parts, i.e., a fixed lens unit Y1, a decentering lens unit Y2 and a fixed lens unit Y3. An object point P on the optical axis located away enough from the optical system is assumed to cast itself as an image point p at the center on the focal plane IP.

Now, suppose the optical system with inclusion of the focal plane IP instantaneously tilts by vibration as shown in Fig. 14B, then the object point P also instantaneously moves its image to a point p', shaking the image.

Meanwhile, if the decentering lens unit Y2 moves in a direction perpendicular to the optical axis, then the image point p shifts to a position p''. The resultant amount and direction of the movement of the image point p depend on the power arrangement, being expressed as the decentering sensitivity of that lens unit.

On this account, the decentering lens unit Y2 is made to move in an appropriate direction perpendicular to the optical axis and by an appropriate distance so as to bring the displaced image point p' in Fig. 14B to the initial position p. As shown in Fig. 14D, the shake compensation or image stabilization is thus performed.

Now assuming that the optical axis has inclined to $\theta°$ and letting the focal length of the entire optical system be denoted by f and the decentering sensitivity of the lens unit Y2 for shifting by TS, the required amount of (shifting) movement, $\Delta$, of the decentering lens unit Y2 for correcting the inclination is given by the following equation:

$$\Delta = f \cdot \tan(\theta)/TS.$$

If the decentering sensitivity TS of the lens unit for shifting is too large, the amount of movement $\Delta$ takes a small value. Therefore, the required amount of movement for stabilizing the image can be made small, but it becomes difficult to control the movement with an accuracy high enough to stabilize the image. So, an inadequate correction results.

Particularly for the video camera or digital still camera, because, as the image size of the sensor such as CCD is smaller than for the silver halide film, the equivalent focal length to the same image angle is shorter, the shifting lens unit has to move a shorter distance, $\Delta$, to correct the same angle.

Hence, if the precision accuracy of the operating mechanism is on the same order, it results that the insufficiency of correction becomes relatively large.

If the decentering sensitivity TS is too small, on the other hand, the required amount for control of movement of the lens unit for shifting becomes large and the actuator or like driving means for moving the lens unit for shifting also becomes large.

In the present invention, the refractive power arrangement of the lens units is made appropriate to determine the decentering sensitivity TS of the third lens unit at a proper value, thus achieving an optical system which is less inadequate to correct for stabilizing the image due to the control tolerance of the mechanisms and which lays a lesser load on the driving means such as actuator.

In the present embodiment, the third lens unit is composed of a positive lens L31 of which both lens surfaces are convex, a negative lens L32 of meniscus form having a strong concave surface facing the image side and a positive lens L33 of meniscus form convex toward the object side, as arranged in this order from the object side.

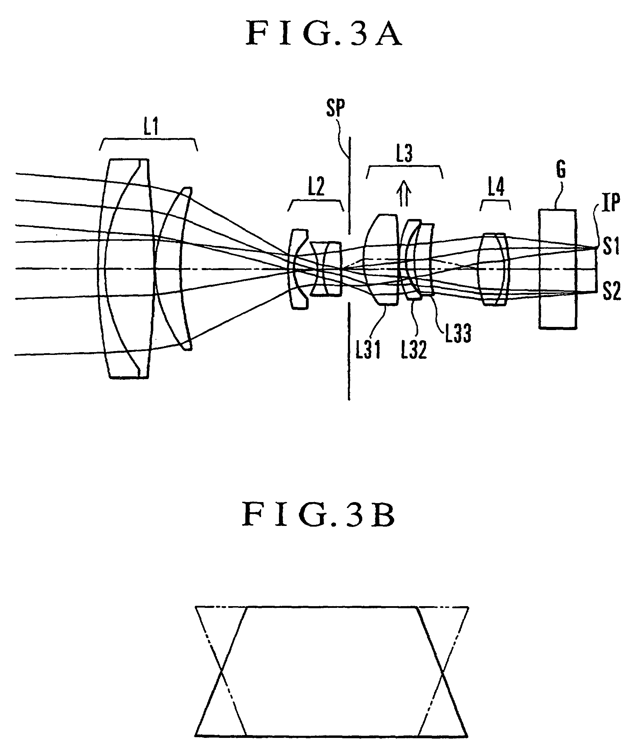

In the numerical examples 1 and 2 shown in Fig. 2 and Fig. 3A, respectively, the front surface (on the object side) of the positive lens L31 and the rear surface (on the image side) of the positive lens L33 are formed to aspheric shapes.

Using the negative lens of meniscus form concave toward the image side, the third lens unit as a whole takes the telephoto form. Accordingly, the interval between the principal points of the second and third lens units is shortened, thus achieving a shortening of the total length of the optical system.

In a case where such a negative meniscus lens is introduced, its surfaces produce positive distortion.

Now suppose that the third lens unit as a whole has positive distortion and that the third lens unit as a whole has moved upward as shown in Fig. 3A for the purpose of stabilizing an image. At this time, an off-axial ray which advances to a point S1 passes through the third lens unit at a lower height. So, the positive distortion decreases. For another off-axial ray which advances to a point S2, the positive distortion increases. Therefore, an object of rectangular shape, when imaged, deforms to a trapezoid such as that shown by solid lines in Fig. 3B.

Conversely when the third lens unit has moved downward, the deformation is like that shown by dashed lines in Fig. 3B. As vibrations are given, the deformation of the image changes. Particularly in motion pictures, the viewer is impressed uncomfortable. To reduce this deformation, all what to do is only to decrease the distortion produced by the whole third lens unit.

In the numerical examples 1 and 2, the positive lens L33 is positioned on the image side of the negative meniscus lens L32 and has its rear surface provided with an asphere. Accordingly, while keeping the telephoto form, the distortion is corrected in the third lens unit. The decentering distortion produced when the image is stabilized by shifting the third lens unit is thus reduced.

Also, since, in the numerical examples 1 and 2, the lens L31 is provided with an aspheric surface at the front surface, the spherical aberration is suppressed in the third lens unit, which in turn reduces the decentering coma in stabilizing the image.

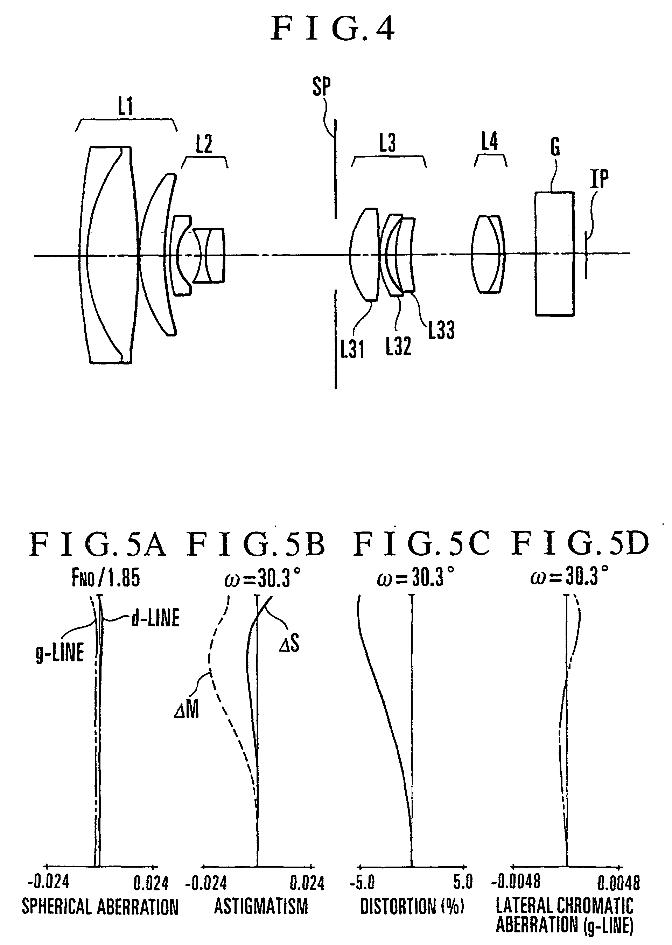

In the numerical example 3 shown in Fig. 4, the negative lens L32 of meniscus form is provided with an aspheric surface at the rear surface. Accordingly, while keeping the telephoto form, the distortion is corrected in the third lens unit. The decentering distortion produced when the image is stabilized by shifting the third lens unit is thus reduced. The lens L31, too, is provided with an aspheric surface at the front surface to suppress the spherical aberration and coma within the third lens unit. The decentering coma is thus reduced in stabilizing the image.

The features described above, when satisfied, realize the variable magnification optical system having the image stabilizing function according to the invention. To further improve the optical performance, while still maintaining the shortening of the total length of the optical system to be achieved, it is preferable to satisfy at least one of the following conditions.

(i-1) The focal length f3N of the negative lens L32 in terms of the focal length f3 of the third lens unit lies in the following range:

$$1.0 < |f3N/f3| < 1.6 \tag{1}$$

The inequalities of condition (1) have an aim to make up the third lens unit in the telephoto type to thereby achieve a compact form of the entirety of the optical system. When the lower limit of the condition (1) is exceeded, as this means that the refractive power of the negative lens L32 in the third lens unit is too strong, it is easier to shorten the total length of the optical system, but the Petzval sum increases in the negative sense so that the curvature of field is difficult to correct. Conversely when the upper limit is exceeded, the total length of the optical system is left insufficiently shortened.

(i-2) The focal length f3 of the third lens unit in terms of the focal length fW at the wide-angle end of the entire optical system lies in the following range:

$$2.3 < f3/fW < 4.0 \tag{2}$$

The inequalities of condition (2) have an aim to make a good compromise between the shortening of the total length of the optical system and the proper decentering sensitivity of the shift lens unit, thus maintaining good performance in stabilizing the image. When the refractive power of the third lens unit is too strong as exceeding the lower limit of the condition (2), the decentering sensitivity of the shift lens unit becomes unduly high. So, the precision accuracy of the operating mechanism must be made severe. Otherwise, the inadequacy of correction would remain large in stabilizing the image. Conversely when the refractive power of the third lens unit is weakened beyond the upper limit, in some cases, the shifting amount of the third lens unit for stabilizing the image increases greatly. In other cases, the total length of the optical system increases objectionably.

(i-3) The focal length f2 of the second lens unit lies in the following range:

$$0.23 < \left| f2/\sqrt{fW \cdot fT} \right| < 0.35 \tag{3}$$

Where fW and fT are the focal lengths at the wide-angle end and the telephoto end of the entire optical system, respectively.

When the lower limit of the condition (3) is exceeded, as this means that the focal length of the second lens unit is too strong, the total length of the optical system is easy to shorten, but it becomes objectionably difficult to correct the field curvature and distortion for good stability throughout the entire zooming range. When the refractive power of the second lens unit is too weak over the upper limit of the condition (3), the required movement for the given zoom ratio of the second lens unit increases unduly greatly.

Also, for the image stabilizing optical system according to the invention to secure a compensating angle large enough to stabilize the image in most situations in such a manner that the optical performance is maintained stable throughout the entire range of compensating angles, it is preferable to satisfy the following condition:

$$3.5 \times 10^{-3} < \frac{Dm(1-\beta 3t)\,\beta 4t}{fT} < 5.2 \times 10^{-2} \tag{4}$$

where Dm is the possible maximum movement of the third lens unit when stabilizing the image, and $\beta 3t$ and $\beta 4t$ are the paraxial lateral magnifications at the telephoto end of the third lens unit and the fourth lens unit, respectively.

When the lower limit of the condition (4) is exceeded, the compensating angle for stabilizing the image becomes small, so that the image stabilizing effect becomes small. When the upper limit is exceeded, the stabilization of the image causes deterioration of the optical performance and conspicuous changes of the light amount.

Next, the numerical examples 1 to 3 of the invention are shown with the numerical data in tables below, where Ri is the radius of curvature of the i-th lens surface when counted from the object side, Di is the i-th lens thickness or air separation when counted from the object side, and Ni and vi are respectively the refractive index and Abbe number of the glass of the i-th lens element when counted from the object side.

The values of the factors in the above-described conditions (1) to (4) for the numerical examples 1 to 3 are listed in Table-1.

The shape of the aspheric surface is expressed in the coordinates with an X axis in the axial direction and an H axis in the direction perpendicular to the optical axis, the direction in which light advances being taken as positive, by the following equation:

$$X = \frac{(1/R)\,H^2}{1 + \sqrt{1 - (H/R)^2}} + AH^2 + BH^4 + CH^6 + DH^8 + EH^{10}$$

where R is the radius of the osculating sphere, and A, B, C, D and E are the aspheric coefficients.
The values of the aspheric coefficients are also tabulated where the notation: "e-0X" means $10^{-X}$.

| (Numerical Example 1) | | | |
|---|---|---|---|
| f = 1-9.75    Fno= 1.85-2.46     2ω= 60.5°-6.8° | | | |
| R 1= 12.404 | D 1= 0.18 | N 1= 1.84666 | v 1= 23.8 |
| R 2= 4.052 | D 2= 1.21 | N 2= 1.71299 | v 2= 53.8 |
| R 3= -17.341 | D 3= 0.04 | | |
| R 4= 3.150 | D 4= 0.60 | N 3= 1.77249 | v 3= 49.6 |
| R 5= 6.789 | D 5= Variable | | |
| R 6= 4.605 | D 6= 0.14 | N 4= 1.88299 | v 4= 40.8 |
| R 7= 1.042 | D 7= 0.54 | | |
| R 8= -1.239 | D 8= 0.12 | N 5= 1.71299 | v 5= 53.8 |
| R 9= 1.474 | D 9= 0.44 | N 6= 1.84666 | v 6= 23.8 |
| R10= -10.154 | D10= Variable | | |
| R11= Stop | D11= 0.33 | | |
| *R12= 1.589 | D12= 0.86 | N 7= 1.66910 | v 7= 55.4 |
| R13- -20.729 | D13= 0.04 | | |
| R14= 2.119 | D14= 0.14 | N 8= 1.84666 | v 8= 23.8 |
| R15= 1.189 | D15= 0.21 | | |
| R16= 2.082 | D16= 0.40 | N 9= 1.58312 | v 9= 59.4 |
| *R17= 4.282 | D17= Variable | | |
| *R18= 2.376 | D18= 0.64 | N10= 1.58312 | v10= 59.4 |
| R19= -1.744 | D19= 0.12 | N11= 1.84666 | v11= 23.8 |
| R20= -3.655 | D20= 0.71 | | |
| R21= ∞ | D21= 0.88 | N12= 1.51633 | v12= 64.1 |
| R22= ∞ | | | |

*) Aspheric Surface

| Aspheric Coefficients: | | | |
|---|---|---|---|
| R12: | K=-3.068e+00 | B= 6.133e-02 | C=-1.048e-02 |
| | D=-4.205e-03 | E= 2.843e-03 | |
| R17: | K=-5.948e+01 | B= 7.172e-02 | C=-5.099e-02 |
| | D= 5.965e-03 | E= 0 | |
| R18: | K=-4.437e+00 | B= 3.052e-02 | C=-6.496e-03 |
| | D= 9.474e-03 | E=-1.915e-03 | |

| Variable Separation | Focal Length | | |
|---|---|---|---|
| | 1.00 | 4.61 | 9.75 |
| D 5 | 0.14 | 2.06 | 2.60 |
| D10 | 2.65 | 0.73 | 0.19 |
| D17 | 1.34 | 0.52 | 1.36 |
| The Maximum Movement of the third Lens Unit: 0.320 | | | |

| (Numerical Example 2) | | | |
|---|---|---|---|
| f= 1-9.77 | Fno= 1.85-2.57 | 2ω= 59.4°-6.7° | |
| R 1= 12.041 | D 1= 0.17 | N 1= 1.80518 | ν 1= 25.4 |
| R 2= 3.662 | D 2= 1.19 | N 2= 1.69679 | ν 2= 55.5 |
| R 3= -15.896 | D 3= 0.04 | | |
| R 4= 2.995 | D 4= 0.59 | N 3= 1.77249 | ν 3= 49.6 |
| R 5= 6.384 | D 5= Variable | | |
| R 6= 4.213 | D 6= 0.14 | N 4= 1.88299 | ν 4= 40.8 |
| R 7= 0.999 | D 7= 0.52 | | |
| R 8= -1.184 | D 8= 0.12 | N 5= 1.69679 | ν 5= 55.5 |
| R 9= 1.425 | D 9= 0.42 | N 6= 1.84666 | ν 6= 23.8 |
| R10= -14.838 | D10= Variable | | |
| R11= Stop | D11= 0.33 | | |
| *R12= 1.485 | D12= 0.70 | N 7= 1.66910 | ν 7= 55.4 |
| R13= -15.967 | D13= 0.03 | | |
| R14= 2.006 | D14= 0.14 | N 8= 1.84666 | ν 8= 23.8 |
| R15= 1.169 | D15= 0.24 | | |
| R16= 2.449 | D16= 0.35 | N 9= 1.58312 | ν 9= 59.4 |
| *R17= 4.140 | D17= Variable | | |
| *R18= 2.346 | D18= 0.63 | N10= 1.58913 | ν10= 61.2 |
| R19= -1.584 | D19= 0.12 | N11= 1.84666 | ν11= 23.8 |
| R20= -3.394 | D20= 0.70 | | |
| R21= ∞ | D21= 0.86 | N12= 1.51633 | ν12= 64.1 |
| R22= ∞ | | | |

| Aspheric Coefficients: | | | |
|---|---|---|---|
| R12: | K=-2.933e+00 | B= 7.010e-02 | C=-1.269e-02 |
| | D=-4.760e-03 | E= 3.375e-03 | |
| R17: | K=-4.936e+01 | B= 7.490e-02 | C=-3.698e-02 |
| | D= 7.116e-03 | E= 0 | |
| R18: | K=-4.241e+00 | B= 3.389e-02 | C=-9.367e-03 |
| | D= 1.652e-02 | E=-5.909e-03 | |

| Variable Separation | Focal Length | | |
|---|---|---|---|
| | 1.00 | 4.61 | 9.77 |
| D 5 | 0.13 | 1.94 | 2.45 |
| D10 | 2.51 | 0.70 | 0.19 |

(continued)

| Variable Separation | Focal Length | | |
|---|---|---|---|
| | 1.00 | 4.61 | 9.77 |
| D17 | 1.42 | 0.60 | 1.48 |
| The Maximum Movement of the third Lens Unit: 0.150 | | | |

| (Numerical Example 3) | | | |
|---|---|---|---|
| f= 1-9.76        Fno= 1.85-2.44        2ω= 60.5°-6.8° | | | |
| R 1= 13.534 | D 1= 0.18 | N 1= 1.84666 | ν 1= 23.8 |
| R 2= 4.112 | D 2= 1.21 | N 2= 1.71299 | ν 2= 53.8 |
| R 3= -16.831 | D 3= 0.04 | | |
| R 4= 3.173 | D 4= 0.60 | N 3= 1.77249 | ν 3= 49.6 |
| R 5= 6.780 | D 5= Variable | | |
| R 6= 4.370 | D 6= 0.14 | N 4= 1.83480 | ν 4= 42.7 |
| R 7= 1.013 | D 7= 0.57 | | |
| R 8= -1.234 | D 8= 0.12 | N 5= 1.69679 | ν 5= 55.5 |
| R 9= 1.525 | D 9= 0.44 | N 6= 1.84666 | ν 6= 23.8 |
| R10= -11.259 | D10= Variable | | |
| R11= Stop | D11= 0.33 | | |
| *R12= 1.649 | D12= 0.76 | N 7= 1.67790 | ν 7= 55.3 |
| R13= -13.084 | D13= 0.04 | | |
| R14= 2.280 | D14= 0.14 | N 8= 1.84666 | ν 8= 23.8 |
| *R15= 1.243 | D15= 0.18 | | |
| R16= 2.016 | D16= 0.40 | N 9= 1.58312 | ν 9= 59.4 |
| R17= 4.117 | D17= Variable | | |
| *R18= 2.391 | D18= 0.64 | N10= 1.58913 | ν10= 61.2 |
| R19= -1.763 | D19= 0.12 | N11= 1.84666 | ν11= 23.8 |
| R20= -3.732 | D20= 0.60 | | |
| R21= ∞ | D21= 0.88 | N12= 1.51633 | ν12= 64.1 |
| R22= ∞ | | | |

| Aspheric Coefficients: | | | |
|---|---|---|---|
| R12: | K=-3.240e+00 | B= 6.578e-02 | C=-1.729e-02 |
| | D=-8.774e-04 | E= 1.601e-03 | |
| R15: | K= 1.204e-01 | B=-2.688e-03 | C= 1.003e-02 |
| | D=-2.891e-02 | E= 0 | |
| R18: | K=-3.069e+00 | B= 2.134e-02 | C=-4.778e-03 |
| | D= 1.123e-02 | E=-4.209e-03 | |

| Variable Separation | Focal Length | | |
|---|---|---|---|
| | 1.00 | 4.47 | 9.76 |
| D 5 | 0.15 | 2.13 | 2.69 |
| D10 | 2.74 | 0.75 | 0.19 |
| D17 | 1.64 | 0.81 | 1.63 |

(continued)

| Variable Separation | Focal Length | | |
|---|---|---|---|
| | 1.00 | 4.47 | 9.76 |
| The Maximum Movement of the third Lens Unit: 0.250 | | | |

Table-1

| Condition | Numerical Example | | |
|---|---|---|---|
| | 1 | 2 | 3 |
| (1) $\|f3N/f3\|$ | 1.233 | 1.318 | 1.256 |
| (2) $f3/fW$ | 2.795 | 2.719 | 2.744 |
| (3) $\|f2/\sqrt{fW\cdot fT}\|$ | 0.282 | 0.268 | 0.280 |
| (4) $\dfrac{Dm(1-\beta 3t)\,\beta 4t}{fT}$ | 0.0353 | 0.0167 | 0.0285 |

It will be appreciated from the foregoing that, according to the invention, as applied to the variable magnification optical system in which a lens unit of relatively small size and light weight moves in the direction perpendicular to the optical axis to compensate for the shake of the image when the variable magnification optical system vibrates (tilts), the proper rules of design are set forth for the construction and arrangement of the constituent lenses of that lens unit. This produces great advantages of improving the compact form of the housing for the entire optical system, simplifying the structure of the operating mechanism, and reducing the load on the driving means, while still permitting the decentering aberrations to be maintained stable at a minimum throughout the entire shifting range. A variable magnification optical system having the image stabilizing function which is corrected well for the decentering aberrations is thus achieved.

It will be appreciated from the foregoing that, according to the invention, as applied to the variable magnification optical system in which a lens unit of relatively small size and light weight moves in the direction perpendicular to the optical axis to compensate for the shake of the image as the variable magnification optical system vibrates (tilts), the proper rules of design are set forth for the construction and arrangement of the constituent lenses of that lens unit. This produces great advantages of improving the compact form of the entire optical system, simplifying the structure of the operating mechanism, and reducing the load on the driving means, while still permitting the decentering aberrations to be maintained stable at a minimum throughout the entire shifting range. A variable magnification optical system having the image stabilizing function which is corrected well for the decentering aberrations is thus achieved.

A variable magnification optical system having an image stabilizing function includes, in order from an object side to an image side, a fixed first lens unit of positive refractive power, a second lens unit of negative refractive power, a third lens unit of positive refractive power and a fourth lens unit of positive refractive power. The second lens unit and the fourth lens unit are moved to effect variation of magnification. The third lens unit has a negative lens of meniscus form concave toward the image side and an aspheric surface, and the third lens unit is movable in a direction perpendicular to an optical axis to stabilize an image, or a lens sub-unit constituting part of the third lens unit is movable in the direction perpendicular to the optical axis to stabilize an image.

## Claims

1. A variable magnification optical system having an image stabilizing function, comprising, in order from an object side to an image side, a fixed first lens unit (L1) of positive refractive power, a second lens unit (L2) of negative refractive power, a third lens unit (L3) of positive refractive power and a fourth lens unit (L4) of positive refractive power, said second lens unit (L2) and said fourth lens unit (L4) being moved to effect variation of magnification, wherein said third lens unit (L3) has a negative lens (L32) of meniscus form concave toward the image side, and said third lens unit is movable in a direction perpendicular to an optical axis to stabilize an image,
**characterized in that**
said third lens unit (L3) has an aspheric surface and, in the order from the object side to the image side, a positive first lens (L31), said negative lens of meniscus form as second lens (L32) and a positive third lens (L33).

2. A variable magnification optical system according to claim 1, satisfying the following condition:

$$1.0 < |f3N/f3| < 1.6$$

wherein f3N and f3 are focal lengths of said negative second lens (L32) and said third lens unit (L3), respectively.

3. A variable magnification optical system according to claim 1, wherein said aspheric surface of said third lens unit (L3) is formed on one of said negative second lens (L32) and said first lens (L31).

4. A variable magnification optical system according to claim 1, wherein said positive first lens (L31) has a strong convex surface facing the object side, and said positive third lens (L33) has a meniscus form convex toward the object side.

5. A variable magnification optical system according to claim 4, wherein one surface of said positive first lens (L31) is an aspheric surface.

6. A variable magnification optical system according to claim 4, wherein one surface of said positive third lens (L33) is an aspheric surface.

7. A variable magnification optical system according to claim 1, satisfying the following condition:

$$2.3 < f3/fW < 4.0$$

where f3 is a focal length of said third lens unit (L3), and fW is a focal length at a wide-angle end of the entire optical system.

8. A variable magnification optical system according to claim 1, satisfying the following condition:

$$0.23 < \left| f2/ \sqrt{\sqrt{fW \cdot fT}} \right| < 0.35$$

where f2 is a focal length of said second lens unit (L2), and fW and fT are focal lengths at a wide-angle end and a telephoto end of the entire optical system, respectively.

9. A variable magnification optical system according to claim 1, satisfying the following condition:

$$3.5 \times 10^{-3} < \frac{Dm(1-\beta 3t)\beta 4t}{fT} < 5.2 \times 10^{-2}$$

where Dm is a maximum movement of said third lens unit (L3) in stabilizing an image, and $\beta 3t$ and $\beta 4t$ are paraxial lateral magnifications at a telephoto end of said third lens unit (L3) and said fourth lens unit (L4), respectively.

**Patentansprüche**

1. Variables optisches Vergrößerungssystem mit einer Bild-Stabilisierungsfunktion, wobei das Vergrößerungssystem in der Reihenfolge von einer Objektseite zu einer Bildseite eine feste erste Linseneinheit (L1) mit positiver Strahlbrechkraft, eine zweite Linseneinheit (L2) mit negativer Strahlbrechkraft, eine dritte Linseneinheit (L3) mit positiver Strahlbrechkraft sowie eine vierte Linseneinheit (L4) mit positiver Strahlbrechkraft aufweist, wobei die zweite Linseneinheit (L2) und die vierte Linseneinheit (L4) bewegt werden, um eine Variation der Verstärkung zu bewirken, die dritte Linseneinheit (L3) eine negative Linse (L32) mit einer konkav in Richtung der Bildseite ausgebildeten Meniskusform aufweist, und die dritte Linseneinheit in eine Richtung senkrecht zu einer optischen Achse bewegbar ist, um ein Bild zu stabilisieren,
**dadurch gekennzeichnet, dass**

die dritte Linseneinheit (L3) eine asphärische Fläche sowie in der Reihenfolge von der Objektseite zu der Bildseite eine positive erste Linse (L31), die negative Linse mit der Meniskusform als zweite Linse (L32) sowie eine dritte positive Linse (L33) aufweist.

2. Variables optisches Vergrößerungssystem nach Anspruch 1, welches die nachfolgende Bedingung erfüllt:

$$1{,}0 < |f3N/f3| < 1{,}6$$

, wobei f3N und f3 jeweils die Brennweiten der negativen zweiten Linse (L32) und der dritten Linseneinheit (L3) sind.

3. Variables optisches Vergrößerungssystem nach Anspruch 1, in welchem die asphärische Fläche der dritten Linseneinheit (L3) an der negativen zweiten Linse (L32) oder der ersten Linse (L31) ausgebildet ist.

4. Variables optisches Vergrößerungssystem nach Anspruch 1, in welchem die positive erste Linse (L31) eine in Richtung der Objektseite schauende stark konvexe Fläche aufweist, und in welchem die positive dritte Linse (L33) eine in Richtung der Objektseite konvex ausgebildete Meniskusform aufweist.

5. Variables optisches Vergrößerungssystem nach Anspruch 4, in welchem eine Fläche der positiven ersten Linse (L31) eine asphärische Fläche ist.

6. Variables optisches Vergrößerungssystem nach Anspruch 4, in welchem eine Fläche der positiven dritten Linse (L33) eine asphärische Fläche ist.

7. Variables optisches Vergrößerungssystem nach Anspruch 1, welches die nachfolgende Bedingung erfüllt:

$$2{,}3 < f3/fW < 4{,}0$$

, wobei f3 eine Brennweite der dritten Linseneinheit (L3) und fW eine Brennweite bei einem Weitwinkel-Ende des gesamten optischen Systems ist.

8. Variables optisches Vergrößerungssystem nach Anspruch 1, welches die nachfolgende Bedingung erfüllt:

$$0{,}23 < \left| f2/\sqrt{fW \cdot fT} \right| < 0{,}35$$

, wobei f2 eine Brennweite der zweiten Linseneinheit (L2) ist, und wobei *fW* und *fT* jeweils die Brennweiten bei einem Weitwinkel-Ende und einem Tele-Ende des gesamten optischen Systems sind.

9. Variables optisches Vergrößerungssystem nach Anspruch 1, welches die nachfolgende Bedingung erfüllt:

$$3{,}5 \cdot 10^{-3} < \frac{Dm(1-\beta 3t)\beta 4t}{fT} < 5{,}2 \cdot 10^{-2}$$

, wobei *Dm* eine maximale Bewegung der dritten Linseneinheit (L3) beim Stabilisieren eines Bildes ist, und wobei β*3t* und β*4t* die paraxialen Seiten-Verstärkungen jeweils bei dem Tele-Ende der dritten Linseneinheit (L3) und der vierten Linseneinheit (L4) sind.

**Revendications**

1. Système optique à grossissement variable comportant une fonction de stabilisation d'image, comprenant, dans un ordre allant d'un côté objet à un côté image, une première unité fixe de lentille (L1) à puissance optique positive, une deuxième unité de lentille (L2) à puissance optique négative, une troisième unité de lentille (L3) à puissance optique positive et une quatrième unité de lentille (L4) à puissance optique négative, ladite deuxième unité de lentille (L2) et ladite quatrième unité de lentille (L4) étant mobiles de manière à exécuter la variation du grossissement, dans lequel ladite troisième unité de lentille (L3) comporte une lentille négative (L32) en forme de ménisque concave dans la direction du côté image, et ladite troisième unité de lentille est mobile dans une direction perpendiculaire à un axe optique de façon à stabiliser une image,

**caractérisé en ce que**

ladite troisième unité de lentille (L3) possède une surface asphérique et, dans l'ordre allant du côté objet au côté image, une première lentille positive (L31), ladite lentille négative en forme de ménisque comme deuxième lentille (L32) et une troisième lentille positive (L33).

2. Système optique à grossissement variable selon la revendication 1, satisfaisant à la condition suivante :

$$1,0 < |f3N/f3| < 1,6$$

où f3N et f3 sont respectivement les distances focales de ladite deuxième lentille négative (L32) et de ladite troisième unité de lentille (L3).

3. Système optique à grossissement variable selon la revendication 1, dans lequel ladite surface asphérique de ladite troisième unité de lentille (L3) est formée de l'une de ladite deuxième lentille négative (L32) et de ladite première lentille (L31).

4. Système optique à grossissement variable selon la revendication 1, dans lequel ladite première lentille positive (L31) possède une surface fortement convexe faisant face au côté objet, et ladite troisième lentille positive (L33) a une forme de ménisque concave dans la direction du côté objet.

5. Système optique à grossissement variable selon la revendication 4, dans lequel une surface de ladite première lentille positive (L31) est une surface asphérique.

6. Système optique à grossissement variable selon la revendication 4, dans lequel une surface de ladite troisième lentille positive (L33) est une surface asphérique.

7. Système optique à grossissement variable selon la revendication 1, satisfaisant à la condition suivante :

$$2,3 < f3/fW < 4,0$$

où f3 est une distance focale de ladite troisième unité de lentille (L3), et fW est une distance focale à l'extrémité à grand angle de l'ensemble du système optique.

8. Système optique à grossissement variable selon la revendication 1, satisfaisant à la condition suivante :

$$0,23 < \left|f2/\sqrt{fW \cdot fT}\right| < 0,35$$

où f2 est une distance focale de ladite deuxième unité de lentille (L2), et fW et fT sont respectivement des distances focales à une extrémité à grand angle et à une extrémité de téléobjectif de l'ensemble du système optique.

9. Système optique à grossissement variable selon la revendication 1, satisfaisant à la condition suivante :

$$3,5 \times 10^{-3} < \frac{Dm(1-\beta 3t)\beta 4t}{fT} < 5,2 \times 10^{-2}$$

où Dm est un mouvement maximal de ladite troisième unité de lentille (L3) dans la stabilisation d'une image, et $\beta 3t$ et $\beta 4t$ sont respectivement des grossissements latéraux paraxiaux à une extrémité de téléobjectif de ladite troisième unité de lentille (L3) et de ladite quatrième unité de lentille (L4).

# F I G. 1

# F I G. 2

# FIG.3A

# FIG.3B

# F I G . 4

# F I G . 5A  F I G . 5B  F I G . 5C  F I G . 5D

Fno / 1.85

$\omega = 30.3°$

$\omega = 30.3°$

$\omega = 30.3°$

g-LINE  d-LINE

$\Delta S$

$\Delta M$

-0.024    0.024
SPHERICAL ABERRATION

-0.024    0.024
ASTIGMATISM

-5.0    5.0
DISTORTION (%)

-0.0048    0.0048
LATERAL CHROMATIC
ABERRATION (g-LINE)

FIG.6A  FIG.6B  FIG.6C  FIG.6D

Fno/1.85            ω=11.0°          ω=11.0°          ω=11.0°

d-LINE    g-LINE    ΔS    ΔM

-0.024    0.024    -0.024    0.024    -5.0    5.0    -0.0048    0.0048
SPHERICAL ABERRATION    ASTIGMATISM    DISTORTION (%)    LATERAL CHROMATIC ABERRATION (g-LINE)

FIG.7A  FIG.7B  FIG.7C  FIG.7D

Fno/2.45            ω=3.4°           ω=3.4°           ω=3.4°

d-LINE    g-LINE    ΔS    ΔM

-0.024    0.024    -0.024    0.024    -5.0    5.0    -0.0048    0.0048
SPHERICAL ABERRATION    ASTIGMATISM    DISTORTION (%)    LATERAL CHROMATIC ABERRATION (g-LINE)

# FIG.8A  FIG.8B  FIG.8C  FIG.8D

Fно/1.85     ω=29.7°     ω=29.7°     ω=29.7°

g-LINE    d-LINE     ΔS     ΔM

-0.024   0.024    -0.024   0.024    -5.0   5.0    -0.0048   0.0048

SPHERICAL ABERRATION    ASTIGMATISM    DISTORTION (%)    LATERAL CHROMATIC ABERRATION (g-LINE)

# FIG.9A  FIG.9B  FIG.9C  FIG.9D

Fно/1.85     ω=10.7°     ω=10.7°     ω=10.7°

d-LINE    g-LINE     ΔS     ΔM

-0.024   0.024    -0.024   0.024    -5.0   5.0    -0.0048   0.0048

SPHERICAL ABERRATION    ASTIGMATISM    DISTORTION (%)    LATERAL CHROMATIC ABERRATION (g-LINE)

# F I G.10A F I G.10B  F I G.10C  F I G.10D

Fno/2.57　　　ω=3.3°　　　ω=3.3°　　　ω=3.3°

d-LINE　　g-LINE

ΔS

ΔM

-0.024　　0.024　-0.024　　0.024　-5.0　　5.0　-0.0048　　0.0048
SPHERICAL ABERRATION　ASTIGMATISM　DISTORTION (%)　LATERAL CHROMATIC
ABERRATION (g-LINE)

# F I G.11A F I G.11B  F I G.11C  F I G.11D

Fno/1.85　　　ω=30.3°　　　ω=30.3°　　　ω=30.3°

g-LINE　　d-LINE

ΔM　　ΔS

-0.024　　0.024　-0.024　　0.024　-5.0　　5.0　-0.0048　　0.0048
SPHERICAL ABERRATION　ASTIGMATISM　DISTORTION (%)　LATERAL CHROMATIC
ABERRATION (g-LINE)

FIG.12A FIG.12B FIG.12C FIG.12D

FNO/1.85　　　ω=11.3°　　　ω=11.3°　　　ω=11.3°

g-LINE

d-LINE

ΔM

ΔS

-0.024　　0.024　-0.024　　0.024　-5.0　　5.0　-0.0048　　0.0048
SPHERICAL ABERRATION　ASTIGMATISM　DISTORTION (%)　LATERAL CHROMATIC
ABERRATION (g-LINE)

FIG.13A FIG.13B FIG.13C FIG.13D

FNO/2.44　　　ω=3.4°　　　ω=3.4°　　　ω=3.4°

ΔS

ΔM

d-LINE

g-LINE

-0.024　　0.024　-0.024　　0.024　-5.0　　5.0　-0.0048　　0.0048
SPHERICAL ABERRATION　ASTIGMATISM　DISTORTION (%)　LATERAL CHROMATIC
ABERRATION (g-LINE)

# F I G. 14 A

Y1 FIXED LENS UNIT · Y2 DECENTERING LENS UNIT · Y3 FIXED LENS UNIT · IP

P (OBJECT POINT) · p (IMAGE POINT)

REFERENCE STATE

# F I G. 14 B

P · p′

VIBRATION OCCURRING

# F I G. 14 C

P · p″

LENS UNIT SHIFTING

# F I G. 14 D

P · p

IMAGE BEING STABILIZED